# EUROPÄISCHE PATENTANMELDUNG

(11) **EP 2 036 660 A1**
(43) Veröffentlichungstag der Anmeldung: **18.03.2009**
(21) Anmeldenummer: 07017821.5
(22) Anmeldetag: 12.09.2007
(51) Int. Cl.: B23P 19/10, B25J 9/16, G01B 11/24

(54) **Verfahren und Vorrichtung zur lage- und winkelkompensierten Bauteilbefestigung**

(71) Anmelder: Oxenfarth, Hans, 58256 Ennepetal (DE)
(72) Erfinder: Oxenfarth, Hans, 58256 Ennepetal (DE)
(74) Vertreter: Kötter, Ulrich

(57) **Zusammenfassung**

Die Erfindung betrifft ein Verfahren zur lage- und winkelkompensierten Befestigung eines Bauteils (6) mit einer Fügefläche (61) an einen Grundkörper (5) mit wenigstens einer Fügefläche (51), insbesondere an einen Hohlblaskörper, umfassend die Arbeitsschritte dreidimensionale Erfassung der Geometrie- und Lagedaten der Fügefläche (51) des Grundkörpers (5), Zusammenführen von Bauteil (6) und Grundkörper (5) und Durchführung einer mechanischen Verbindungstechnik.

Die Erfindung betrifft weiterhin eine Vorrichtung zur lage- und winkelkompensierten Befestigung eines Bauteils (6) an einem Grundkörper (5), umfassend Mittel (3) zur Positionierung des Grundkörpers (5), Mittel (2) zur Positionierung des Bauteils (6), Mittel (23) zur Erfassung von Geometrie- und Lagedaten eines Körpers (5) sowie eine Steuereinheit (4), wobei die Mittel (3) zur Positionierung des Grundkörpers (5) und die Mittel (2) derart zusammenwirken, dass auf Basis der Geometrie- und Lagedaten eine mechanische Verbindung von Bauteil (6) mit dem Grundkörper (5) unter einem definierten Anstellwinkel erzielbar ist.

## Beschreibung

Die Erfindung betrifft ein Verfahren sowie eine Vorrichtung zur lage- und winkelkompensierten Befestigung eines Bauteils an einem Grundkörper, insbesondere an einem Hohlblaskörper.

An extrusionsgeblasenen Hohlkörpern wie beispielsweise Kraftstofftanks können Applikationsteile, wie beispielsweise Befüllstützen, Be- und Entlüftungsventile oder Befestigungselemente durch unterschiedliche Verfahren befestigt werden. Unter anderem kommen hier mechanische Befestigungsverfahren zum Einsatz. Hierzu sind insbesondere Schraub- und Pressverbindungen sowie Hinterschnittverbindungen zu zählen.

Bei der mechanischen Befestigung werden Applikationsteile in an den Hohlkörpern vorgesehene Öffnungen eingebracht, deren Kontur an die Außenkontur des einzubringenden Applikationsteils im Befestigungsbereich angepasst ist. Im Falle einer Verschraubung weist die Kontur der Öffnung ein Innengewinde auf, welches mit einem an dem Applikationsteil im Befestigungsbereich vorgesehenen Außengewinde korrespondiert.

Bei der Pressverbindung ist die Öffnung des Hohlkörpers derart ausgebildet, dass das Applikationsteil im Befestigungsbereich unter Stauchung der beteiligten Materialien einpressbar ist. Dabei ist die Presspassung der Öffnung derart gewählt, dass einerseits eine stabile Verbindung des Applikationsteils mit dem Hohlkörper erzielt ist, andererseits die Presskräfte jedoch nicht so groß werden, dass die Gefahr einer Beschädigung des Hohlkörpers besteht.

Bei der Hinterschnittverbindung ist im Befestigungsbereich des Applikationsteils ein Hinterschnitt eingebracht, dessen Außenkontur mit der Innenkontur der Öffnung korrespondiert. Vor dem Hinterschnitt ist die Kontur des Applikationsteils vergrößert ausgeführt, so dass beim Einbringen der Applikation in die Öffnung des Hohlkörpers zunächst eine Stauchung der Beteiligten Materialien bewirkt ist, welche sich nach Überwinden des vergrößert ausgeführten Bereichs in den Hinterschnitt entspannt, sodass ein Rasteffekt erzielt ist.

Als problematisch bei den vorgenannten mechanischen Befestigungsverfahren hat sich erwiesen, dass durch größere Winkelabweichungen zwischen den Fügeflächen der miteinander zu verbindenden Bauteile Beschädigungen an den Befestigungsbereichen auftreten können. (Unter dem Begriff "Fügeflächen" werden nachfolgend die dem Hohlkörper zugewandte Fläche des zu fixierenden Bauteils sowie die durch die Öffnung des Hohlkörpers, in die das Bauteil eingebracht werden soll, gebildete Fläche. Sind die Fügeflächen von Bauteil und Hohlkörper(öffnung) vor dem Befestigungsvorgang parallel, so ist eine orthogonale Ausrichtung des Applikationsteils zu der Befestigungsfläche bewirkt.)

Solche Beschädigungen sind beispielsweise Beschädigungen des Innengewindes der Öffnung des Hohlkörpers bei Schraubverbindungen oder Beschädigungen durch ungleiches Einpressen des Applikationsteils beim Einpressverfahren. Weiterhin besteht die Gefahr, dass das die Position und Lage des Applikationsteils nach der Verbindung mit dem Hohlkörper von der definierten SollPosition abweicht, sodass beispielsweise an dem Applikationsteil nachfolgend zu befestigende Bauteile nicht passen (beispielsweise ist beim lageverzerrten Einpressen eines Gewindestifts in einen Kunststofftank die nachträgliche Befestigung eines Hitzeschildes nicht mehr möglich).

Hier will die Erfindung Abhilfe schaffen. Der Erfindung liegt die Aufgabe zu Grunde, ein Verfahren zur lage- und winkelkompensierten Befestigung von Bauteilen zu schaffen, welches auch bei großen Lage- und Winkeltoleranzen der Fügeflächen der zu verbindenden Teile zueinander eine gleichmäßige Befestigung eines Bauteils an einem Hohlkörper ermöglicht. Gemäß der Erfindung wird diese Aufgabe durch die Merkmale des Patentanspruchs 1 gelöst.

Mit der Erfindung ist ein Verfahren zur lage- und winkelkompensierten Befestigung von Bauteilen geschaffen, welches auch bei großen Lage- und Winkeltoleranzen der Fügeflächen der zu verbindenden Teile zueinander eine gleichmäßige Befestigung eines Bauteils an einem Hohlkörper ermöglicht.

In Weiterbildung der Erfindung erfolgt die Erfassung der Geometrie- und Lagedaten durch berührungsloses Abtasten (Scannen). Hierdurch ist ein zeitnahes und verschleißfreies Erfassen der Geometrie- und Lagedaten ermöglicht.

In Ausgestaltung der Erfindung werden die Geometrie- und Lagedaten des gesamten Grundkörpers und seiner Fügeflächen vermessen. Hierdurch ist auch bei mehreren erforderlichen Verbindungsvorgängen an ein und demselben Grundkörper nur eine Erfassung der Geometrie- und Lagedaten erforderlich.

Darüber hinaus können die Messdaten im Rahmen der Qualitätssicherung der zu Grunde liegenden Grundkörper verwendet werden.

Bevorzugt erfolgt zusätzlich eine dreidimensionale Erfassung der Geometrie-und Lagedaten der Fügefläche des Bauteils. Hierdurch ist eine optimale Zuführung der Fügefläche des Bauteils an die Fügefläche des Grundkörpers ermöglicht.

In weiterer Ausgestaltung der Erfindung werden auf Basis der erfassten Geometrie- und Lagedaten zusätzliche Bearbeitungsschritte am Grundkörper vorgenommen. Hierdurch ist eine in Lage und Winkel korrekte Zuführung von Bearbeitungswerkzeugen ermöglicht. Dieses betrifft insbesondere solche Bearbeitungsoperationen, die eine parallele Ausrichtung zur Bearbeitungsfläche erfordern, wie beispielsweise das Einbringen (Schneiden, Fräsen etc.) von Öffnungen in den Grundkörper oder dessen Beschriftung mittels Laser.

Der vorliegenden Erfindung liegt weiterhin die Aufgabe zu Grunde, eine Vorrichtung zur lage- und winkelkompensierten Befestigung eines Bauteils bereit zu stellen, die auch bei großen Lage- und Winkeltoleranzen der Fügeflächen der zu verbindenden Teile zueinander eine gleichmäßige Befestigung eines Bauteils an einem Hohlkörper ermöglicht. Gemäß der Erfindung wird diese Aufgabe durch die Merkmale des Patentanspruchs 7 gelöst.

Mit der Erfindung ist eine Vorrichtung zur lage- und winkelkompensierten Befestigung eines Bauteils geschaffen, die auch bei großen Lage- und Winkeltoleranzen der Fügeflächen der zu verbindenden Teile zueinander eine gleichmäßige Befestigung eines Bauteils an einem Hohlkörper ermöglicht.

In Weiterbildung der Erfindung wirken die Mittel zur Positionierung des Grundkörpers und die Mittel zur Positionierung des Bauteils gesteuert durch die Steuereinheit derart zusammen, dass beim Zusammenfügen von Grundkörper und Bauteil auf Basis der Geometrie- und Lagedaten ein über die Fügeflächen gleichmäßiger Anpressdruck erzielbar ist. Hierdurch ist eine gleichmäßige, beschädigungsfreie Verbindung auch bei dünnwandigen, Hohlkörpern mit federnden Wänden gewährleistet.

In Ausgestaltung der Erfindung ist wenigstens ein Mittel zur Positionierung des Bauteils ein Mehrachsenroboter. Hierdurch ist ein hoher Durchsatz an Verbindungsvorgängen verbunden mit einer hohen Prozessgenauigkeit ermöglicht.

Vorteilhaft ist das Mittel zur Erfassung von Geometrie- und Lagedaten ein lasergestützter 3-D-Scanner. Hierdurch ist ein schnelles und verschleißfreies Erfassen der Geometrie- und Lagedaten ermöglicht. Alternativ sind auch andere 3D-Messsysteme einsetzbar.

Bevorzugt sind zusätzlich Mittel zur Bearbeitung des Grundkörpers vorgesehen, welche über die Steuereinheit auf Basis der erfassten Geometrie- und Lagedaten ansteuerbar sind. Hierdurch ist eine zeitnahe Bearbeitung des Grundkörpers einschließlich der Bearbeitung der Fügeflächen ermöglicht.

In weiterer Ausgestaltung sind das Mittel zur Positionierung des Bauteils und das Mittel zur Erfassung von Geometrie- und Lagedaten in einer Handhabungseinheit kombiniert. Hierdurch ist ein zügiger Prozessablauf ermöglicht.

Andere Weiterbildungen und Ausgestaltungen der Erfindung sind in den übrigen Unteransprüchen angegeben. Ein Ausführungsbeispiel der Erfindung ist in den Zeichnungen dargestellt und wird nachfolgend im Einzelnen beschrieben. Es zeigen:
- Fig. 1: Die schematische Darstellung einer Vorrichtung zur lage- und winkelkompensierten Befestigung eines Bauteils und
- Fig. 2: die schematische Darstellung einer kombinierten Handhabungseinheit.

Die als Ausführungsbeispiel gewählte Vorrichtung zur lage- und winkelkompensierten Befestigung eines Bauteils umfasst im Wesentlichen zwei Roboter 1, 2, einen Werkstückträger 3 sowie eine Steuereinheit 4. Anstelle der Roboter 1, 2 sind auch andere steuerbare Positioniersysteme einsetzbar. Der Roboter 1 ist mit einem Werkzeugwechselsystem 11 zur Aufnahme einer Effektoreinheit 12 ausgestattet. Die Effektoreinheit 12 ist mit einem Laserdistanzmesser 121 versehen.

Der Roboter 2 ist ebenfalls mit einem Werkzeugwechselsystem 21 ausgestattet, dass eine Effektoreinheit 22 aufnimmt. Die Effektoreinheit 22 ist mit einer Aufnahme für ein zu fixierendes Bauteil 6 versehen.

Die Roboter 1, 2 sind mit einer gemeinsamen Steuereinheit 4 verbunden.

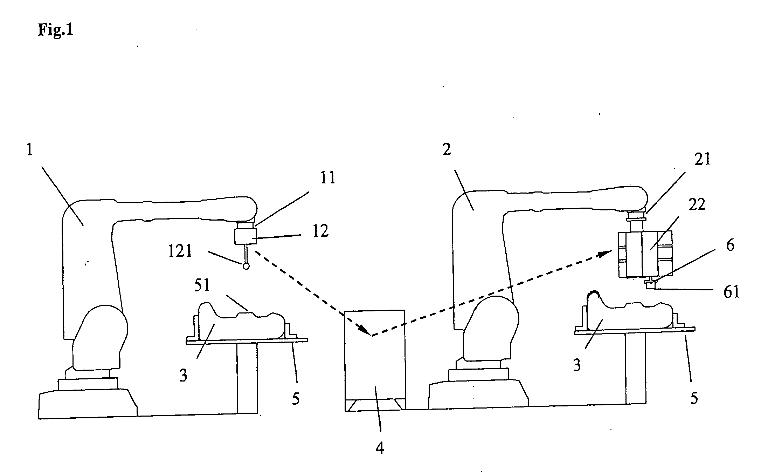

Zum Befestigung eines Bauteils 6 an einen Grundkörper 5 wird der Grundkörper 5 zunächst auf einer Werkstückaufnahme 3 fixiert. Anschließend erfolgt eine dreidimensionale Erfassung der Geometrie- und Lagedaten der Fügefläche 51 des Grundkörpers 5 durch den Laserdistanzmesser 121. Hierbei wird der Effektor 12 mittels des Roboters 1, gesteuert durch Steuereinheit 4 über den Grundkörper 5 geführt. Die erfassten Geometrie- und Lagedaten werden an die Steuereinheit 4 übertragen. (Der Datenfluss ist in Fig. 1 durch gestrichelte Pfeile dargestellt.)

Optional kann zusätzlich die Erfassung eines definierten Punktes außerhalb des Körpers zur Erzeugung von Relativkoordinaten erfolgen. Basierend auf den Geometrie- und Lagedaten der Fügefläche 51 des Grundkörpers 5 - welche im Ausführungsbeispiel bereits mit einer Öffnung für das zu befestigende Bauteil versehen ist - wird der Roboter 2 von der Steuereinheit 4 derart angesteuert, dass die Effektoreinheit 22 in einem definierten Abstand vor die Fügefläche 51 des Grundkörpers 5 positioniert wird. Die Positionierung des Bauteils 6 erfolgt auf Basis der erfassten Geometrie- und Lagedaten. Anschließend wird das Bauteil 6 nach einem Werkzeugwechsel mittels der Effektoreinheit 22 derart auf dem Grundkörper 5 positioniert, dass die Öffnung (Fügefläche 51) vom Grundkörper 5 und die Fügefläche 61 des Bauteils 6 exakt übereinander positioniert sind und das Bauteil 6 über die gesamte Fügefläche 61 mit einem gleichmäßigen Anpressdruck beaufschlagt werden. Über einen - nicht dargestellten - Wegesensor wird die Einpresstiefe des Bauteils gesteuert. In analoger Art und Weise ist ein eine Rastverbindung erzielbar, wobei an Stelle des Wegsensors ein Kraft-Weg-Sensor einsetzbar ist, wodurch der Zeitpunkt der Einrastung ermittelt werden kann. Zu diesem Zeitpunkt wird die Beaufschlagung mit Anpressdruck über die Steuereinheit 4 gestoppt.

In einer alternativen Ausführungsform ist die Öffnung 51 mit einem Innengewinde versehen und das Bauteil ist an seiner der Öffnung bzw. Fügefläche 51 zugewandten Seite mit einem hierzu korrespondierenden Außengewinde versehen. Die Aufnahme für das Bauteil 6 ist drehbar ausgeführt und mit einem Rotationsantrieb gekoppelt, sodass ein Einschrauben des Bauteils 6 in die Öffnung 51 ermöglicht ist. Zur gezielten Einschraubfestigkeit ist der Rotationsantrieb mit einem Drehmomentmodul versehen, worüber das gewünschte Drehmoment einstellbar ist.

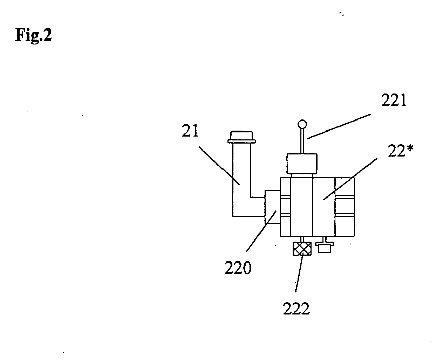

In einer vorteilhaften Ausführungsform gemäß Figur 2 wird eine kombinierte Effektoreinheit 22* eingesetzt. Die kombinierte Effektoreinheit 22* ist über ein drehbares Zwischenstück 220 mit dem Werkzeugwechselsystem 21 des Roboters 2 verbunden. Die Effektoreinheit 22* ist sowohl mit einem 3D-Messsystem 222, als auch mit einer Bauteilaufnahme ausgestattet, so dass zwischen den Prozessschritten der Erfassung der Geometrie- und Lagedaten der Fügefläche des Grundkörpers und der Befestigung des Bauteils kein Werkzeugwechsel erfolgen muss. Im Ausführungsbeispiel kommt innerhalb des 3D-Messsystems ein Laserdistanzmesser zum Einsatz. Alternativ ist auch der Einsatz eines anderen berührungslosen Systems (beispielsweise Ultraschallmessung) oder auch eines taktilen Messsystems möglich. Durch die Effektoreinheit 22* sind die zuvor genannten Prozessschritte mit nur einem Roboter 2 durchführbar.

Weiterhin kann ein Effektor mit einem Bearbeitungswerkzeug, beispielsweise einem Kreisschneider, vorgesehen sein, um auf Basis der erfassten Geometrie-und Lagedaten vorbereiteten Bearbeitungen des Grundkörpers 5 vorzunehmen. Eine solche Bearbeitung kann beispielsweise in der Einbringung einer (kreisrunden) Ausnehmung in einen als Hohlblaskörper ausgeführten Kraftstofftank vor dem Einpressen eines Einfüllstutzens bestehen. Es ist auch denkbar, das Bearbeitungswerkzeug ebenfalls in der kombinierten Effektoreinheit gemäß Figur 2 vorzusehen.

## Patentansprüche

1. Verfahren zur lage- und winkelkompensierten Befestigung eines Bauteils (6) mit einer Fügefläche (61) an einem Grundkörper (5) mit wenigstens einer Fügefläche (51), insbesondere an einen Hohlblaskörper, umfassend folgende Arbeitsschritte:
- dreidimensionale Erfassung der Geometrie- und Lagedaten der zu verbindenden Fügefläche (51) des Grundkörpers (5),
- Zusammenführen von Bauteil (6) und Grundkörper (5) und Durchführung einer mechanischen Verbindungstechnik.

2. Verfahren nach Anspruch 1, **dadurch gekennzeichnet, dass** die Erfassung der Geometrie- und Lagedaten durch berührungsloses Abtasten (Scannen) erfolgt.

3. Verfahren nach einem der vorgenannten Ansprüche, **dadurch gekennzeichnet, dass** die Geometrie- und Lagedaten des gesamten Grundkörpers (5) und seiner Fügeflächen (51) vermessen werden.

4. Verfahren nach einem der vorgenannten Ansprüche, **dadurch gekennzeichnet, dass** zusätzlich eine dreidimensionale Erfassung der Geometrie- und Lagedaten der Fügefläche (61) des Bauteils (6) erfolgt.

5. Verfahren nach einem der vorgenannten Ansprüche, **dadurch gekennzeichnet, dass** die mechanische Verbindungstechnik einen Schraub-, Press- oder Rastvorgang umfasst.

6. Verfahren nach einem der vorgenannten Ansprüche, **dadurch gekennzeichnet, dass** auf Basis der erfassten Geometrie- und Lagedaten zusätzliche Bearbeitungsschritte am Grundkörper (5) vorgenommen werden.

7. Vorrichtung zur Durchführung eines Verfahrens nach einem der Ansprüche 1 bis 6, umfassend Mittel (3) zur Positionierung des Grundkörpers (5), Mittel (2) zur Positionierung des Bauteils (6), Mittel (23) zur Erfassung von Geometrie- und Lagedaten eines Körpers (5) sowie eine Steuereinheit (4), wobei die Mittel (3) zur Positionierung des Grundkörpers (5) und die Mittel (2) zur Positionierung des Bauteils (6) gesteuert durch die Steuereinheit (4) derart zusammenwirken, dass auf Basis der Geometrie- und Lagedaten eine mechanische Verbindung von Bauteil (6) mit dem Grundkörper (5) unter einem definierten Anstellwinkel erzielbar ist.

8. Vorrichtung nach Anspruch 7, **dadurch gekennzeichnet, dass** die Mittel (3) zur Positionierung des Grundkörpers (5) und die Mittel (2) zur Positionierung des Bauteils (6) gesteuert durch die Steuereinheit (4) derart zusammenwirken, dass beim Zusammenfügen von Grundkörper (5) und Bauteil (6) auf Basis der Geometrie- und Lagedaten ein über die Fügeflächen (51, 61) gleichmäßiger Anpressdruck erzielbar ist.

9. Vorrichtung nach einem der Ansprüche 7 und 8, **dadurch gekennzeichnet, dass** wenigstens ein Mittel (2) zur Positionierung des Bauteils (6) ein Mehrachsenroboter ist.

10. Vorrichtung nach einem der Ansprüche 7 bis 9, **dadurch gekennzeichnet, dass** das Mittel (121) zur Erfassung von Geometrie- und Lagedaten ein lasergestützter 3D-Scanner ist.

11. Vorrichtung nach einem der Ansprüche 7 bis 10, **dadurch gekennzeichnet, dass** zusätzlich Mittel zur Bearbeitung des Grundkörpers (5) vorgesehen sind, welche über die Steuereinheit (4) auf Basis der erfassten Geometrie-und Lagedaten ansteuerbar sind.

12. Vorrichtung nach einem der Ansprüche 7 bis 11, **dadurch gekennzeichnet, dass** Mittel (2) zur Positionierung des Bauteils (6) und Mittel (223) zur Erfassung von Geometrie- und Lagedaten in einer Effektoreinheit (22*) kombiniert sind.
